(19) Europäisches Patentamt
European Patent Office
Office européen des brevets

(11) Veröffentlichungsnummer: **0 058 942**
**A1**

(12) # EUROPÄISCHE PATENTANMELDUNG

(21) Anmeldenummer: **82101216.8**

(22) Anmeldetag: **18.02.82**

(51) Int. Cl.³: **C 08 G 59/58**, C 08 G 59/64, C 09 D 3/58

(30) Priorität: **21.02.81 DE 3106529**
**20.08.81 DE 3132884**

(43) Veröffentlichungstag der Anmeldung: **01.09.82**
**Patentblatt 82/35**

(84) Benannte Vertragsstaaten: **AT BE CH DE FR GB IT LI NL SE**

(71) Anmelder: **HOECHST AKTIENGESELLSCHAFT,**
**Postfach 80 03 20, D-6230 Frankfurt/Main 80 (DE)**

(72) Erfinder: **Becker, Wilhelm, Dr., Öjendorfer Höhe 37c,**
**D-2000 Hamburg 74 (DE)**
Erfinder: **Manz, Albrecht, Dr., Pappelweg 15,**
**D-6200 Wiesbaden (DE)**

(54) **Wärmehärtbare Bindemittel aus wässrigen Dispersionen fester Epoxydharze, Verfahren zu deren Herstellung und ihre Verwendung.**

⑰ Wärmehärtbare Bindemittel aus wässrigen Dispersionen fester Epoxydharze spezieller Struktur, worin die Glycidylgruppen zum Teil durch primäre und/oder sekundäre Amine und Quarternisierung in quartäre Ammoniumgruppen umgewandelt sind, die als Härtungsmittel mehrbasische, wasserlösliche Polycarbonsäureeinheiten oder deren Anhydride oder saure Ester, deren COOH-Funktionalität mindestens 3 ist, enthalten, und Verwendung der Bindemittel zur Herstellung gehärteter Produkte, insbesondere von Überzügen.

**EP 0 058 942 A1**

Wärmehärtbare Bindemittel aus wäßrigen Dispersionen fester Epoxydharze, Verfahren zu deren Herstellung und ihre Verwendung

Auf dem Lackharz- und Beschichtungssektor hat sich die Verwendung von Polyglycidyläthern wegen ihrer hervorragenden technologischen Eigenschaften bewährt. Mit der Verwendung von höhermolekularen Polyglycidyläthern mit Erweichungspunkten zwischen 40 und 130°C und Epoxydäquivalenten zwischen 300 und 3000 sind Anwendungsgebiete besonders auf dem Beschichtungssektor erschlossen worden. Die Vernetzung der Epoxydharze, die für Beschichtungen entweder in Form von Pulvern oder Lösungen in organischen Lösungsmitteln verwendet werden, kann in bekannter Weise mit Carbonsäureanhydriden oder mit Dicyandiamid erfolgen, wobei vorwiegend die Epoxydgruppen des Polyglydicyläthers reagieren. Die Vernetzung zu gehärteten Überzügen kann aber auch mittels Melaminharzen oder Resolen, die beide auch veräthert sein können und in einem Anteil von 10 bis 60 Gew.-%, vorzugsweise 20 bis 40 Gew.-% im Gemisch vorliegen, in der Hitze erfolgen, wobei vorwiegend die in dem höhermolekularen Polyglycidyläther vorliegenden OH-Gruppen reagieren. Solche Systeme finden vor allem Anwendung für die Behälterbeschichtung.

Als Nachteil der Pulverbeschichtung ist schlechtes Verlaufen zu nennen. Auch mit den bekannten Verlaufshilfsmitteln kann es nicht so verbessert werden, daß die Oberflächenbeschaffenheit des Filmes an diejenigen heranreicht, die bei Lackfilmen aus lösungsmittelhaltigen Systemen erzielt wird. Ein weiterer Nachteil sind die verhältnismäßig hohen Investitionskosten für Pulvergewinnungs- und Pulverbeschichtungsanlagen.

Aus diesen Gründen wird die Beschichtung mittels lösungsmittelhaltiger Systeme für viele Anwendungsgebiete unentbehrlich bleiben. Jedoch wiegen die Nachteile der hohen Umweltbelastung durch verdampfende Lösungsmittel immer schwerer und der meist erforderliche Bau kostspieliger Nachverbrennungsanlagen und der Verlust des Lösungsmittels stellen entscheidende Punkte bei einer Energie- und Kostenanalyse dar. In manchen Fällen verbietet sich die Verwendung lösungsmittelhaltiger Systeme vollständig aus arbeitshygienischen Gründen.

Aus der US-PS 3 336 253 ist bekannt, Harze in Form von Reaktionsprodukten aus Mono- oder Dialkanolaminen und verschiedenen wasserunlöslichen Polymeren, insbesondere Polyglycidyläthern mit Amin-reaktiven Endgruppen, herzustellen. Diese Produkte werden durch Neutralisation des Alkanolaminrestes mit einer Säure wasserlöslich gemacht. Die bevorzugten Reaktionsprodukte enthalten eine Epoxygruppe je Molekül. Sie werden als Überzüge auf verschiedene Substrate aufgebracht und anschließend durch Selbstpolymerisation vernetzt. Ein Nachteil dieser Überzugsmassen ist die Anwesenheit von Epoxydgruppen, die in Gegenwart von Spuren von sauren oder basischen Stoffen, z.B. den in jedem Molekül vorhandenen endständigen Alkanolaminresten, eine Selbstpolymerisation eingehen können, wobei vernetzte unschmelzbare Produkte entstehen. Hierdurch wird die Lagerfähigkeit stark verringert. In derselben Druckschrift ist angegeben, daß die Lagerstabilität der Polyglycidyläther-Alkanolamin-Reaktionsprodukte dadurch verbessert werden kann, daß man alle nicht-umgesetzten Epoxydgruppen z.B. durch Dialkanolamine beseitigt. Diese Arbeitsweise ist unerwünscht, da dabei alle für die anschließende Vernetzung benötigten reaktiven Stellen, die zur Herstellung eines dauerhaften, lösungsmittelbeständigen Belags erforderlich

sind, beseitigt werden. Diese Produkte sind außerdem nur herstellbar, wenn sehr große Mengen an Dialkanolamin, z.B. bis zu 28 % Diäthanolamin, eingesetzt werden. Die erhaltenen Beschichtungen sind gegenüber wäßrigen Medien derart instabil, daß sie für viele Fälle völlig unbrauchbar sind.

Die nach der DE-OS 2 415 100 hergestellten, mit Wasser verdünnbaren Reaktionsprodukte von Polyepoxyden und Mono- und/oder Dialkanolaminen leiten sich von stöchiometrischen Mengen der Alkanolamine, bezogen auf Epoxydharz ab. Als geeignete Amine sind dort z.B. Diäthanolamin und Dipropanolamin genannt. Hierbei sind die an das Epoxydharz addierten Amine mit Monocarbonsäuren, deren pka-Wert 2 bis 5 beträgt, einschließlich Polyhydroxymonocarbonsäuren mit mindestens 3 OH-Gruppen pro Molekül quaternisiert unter Bildung von quartären Ammoniumgruppen der Struktur (II) (siehe Anspruch 1), worin

$A^{\ominus}$ den anionischen Rest einer Monocarbonsäure,

$R^1$ und $R^2$ Hydroxyalkyl mit 2 oder 3 C-Atomen, insbesondere Hydroxyäthyl oder ß-Hydroxypropyl, bedeuten, jedoch einer der Reste auch Wasserstoff sein kann.

Diese wäßrigen Systeme, die gegebenenfalls in lösungsmittelfreien Dispersionen Verwendung finden können, enthalten Reaktionsprodukte aus Formaldehyd und Phenol, Harnstoff oder Melamin als latenten Härter. Die daraus hergestellten Filme zeigen gute Sterilisationsfestigkeit d.h. sie sind unter den Bedingungen, unter denen Lebensmittelkonserven sterilisiert werden, gut beständig. Es war jedoch erwünscht, phenolfreie Systeme herzustellen.

Nach der DE-OS 2 426 996 wurden zwar die Aminmengen auf ca. 5 % herabgedrückt, jedoch enthalten die Dispersionen noch erhebliche Mengen an Lösungsmitteln. Dieses Verfahren ist auch nicht geeignet, lösungsmittelfreie Dispersionen herzustellen, so daß dadurch ebenfalls eine Umweltbelastung gegeben ist.

Die vorliegende Erfindung vermeidet die genannten Nachteile. Sie betrifft wärmehärtbare Bindemittel aus wäßrigen Dispersionen fester Epoxydharze der Struktur (I) (siehe Anspruch 1), worin $R^3$, $R^4$ und $R^5$, die gleich oder verschieden sein können, Methyl oder Wasserstoff und n eine ganze Zahl von 2 bis 20 bedeuten und die Glycidylgruppen zum Teil durch primäre und/oder sekundäre Amine und Quaternisierung in quartäre Ammoniumgruppen der Struktur (II) (siehe Anspruch 1) umgewandelt sind, worin

$A^{\ominus}$ den anionischen Rest einer Monocarbonsäure mit 1 bis 6 C-Atomen

$R^1$ und $R^2$ Hydroxyalkyl mit 1 bis 6, vorzugsweise 2 bis 4 C-Atomen, insbesondere Hydroxyäthyl oder ß-Hydroxypropyl, bedeuten, jedoch einer der Reste auch H oder Alkyl mit $C_1$ bis $C_6$, vorzugsweise $C_1$ bis $C_4$ sein kann und $R^1$ und $R^2$ gleich oder verschieden sein können

Härtungsmitteln und gegebenenfalls weiteren üblichen Zusatzstoffen, die dadurch gekennzeichnet sind, daß sie als Härtungsmittel mehrbasische, wasserlösliche Polycarbonsäureeinheiten oder deren Anhydride oder saure Ester, deren COOH-Funktionalität mindestens 3 ist, und 0 bis 30, vorzugsweise 0 bis 20 Gew.-% organische Lösungsmittel enthalten.

Die erfindungsgemäßen Bindemittel zeichnen sich vor allem durch ihre sehr gute Elastizität nach der Härtung aus. Außerdem sind sie umweltfreundlich.

Als feste Epoxydharze eignen sich die auf der Basis von Diphenylolpropan und/oder -methan und Epihalogenhydrin und/oder Methylepihalogenhydrin, vorzugsweise Epichlorhydrin, nach den in der Literatur (siehe z. B. "Epoxydverbindungen und Epoxydharze" Paquin (1958), Seite 322 ff) beschriebenen Ein- oder Zweistufenverfahren herstellbaren Epoxydharze. Zweckmäßig besitzen die Epoxydharze Epoxydäquivalente von 300 bis 3000, vorzugsweise von 1000 bis 2500, und Erweichungspunkte (nach Durrans) von 40 bis 145, vorzugsweise 100 bis 130°C.

Geeignete Amine zur Addition an die Glycidylgruppen sind z. B. Mono- und/oder Dialkanolamine der Formel

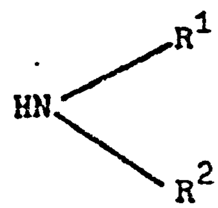

(III),

worin $R^1$ und $R^2$ die oben angegebene Bedeutung haben. Z. B. seien genannt Diäthanolamin, Dipropanolamin, deren Isomere oder Homologe.

Mit Vorteil werden von den im freien Epoxydharz vorhandenen Glycidylgruppen mindestens 5 und höchstens 90, vorzugsweise 40 bis 80 % durch Addition mit den Aminen umgesetzt.

Zur Quaternisierung der an das Epoxydharz addierten Amine, also unter Bildung der quartären Gruppe (II), eignen sich Monocarbonsäuren mit 1 bis 6, vorzugsweise 2 bis 6 C-Atomen, die unsubstituiert oder mit einer OH-Gruppe substituiert sind, z. B. Ameisen-, Essig-, Glykol-, Milchsäure oder Dimethylolpropionsäure, oder Polyhydroxymonocarbonsäuren mit mindestens 3 OH-Gruppen pro Molekül, deren pka-Wert 2 bis 5 beträgt, z.B. Trioxybutancarbonsäuren, wie α,ß,γ-Trioxy-n-valeriansäure, 2-Desoxy-1-ribonsäure (1-Erythro-ß,γ,δ-trioxy-n-valeriansäure), 2-Desoxy-1-rhamnonsäure (1-Arabo-ß,γ,δ-trioxy-n-capronsäure), Digitoxonsäure (d-Ribo-ß,γ,δ-trioxy-n-capronsäure), ferner die Tetraoxybutan-carbonsäuren wie d- und l-Ribonsäure, d- und l-Arabonsäure, d- und l-Xylonsäure, ferner Methylpentonsäuren, wie d-Glucomethylsäure, d-Glucomethylonsäure, d- und l-Rhamnonsäure, l-Fuconsäure, 2-Desoxy-d-Gluconsäure, 1,2,4,5-Tetraoxypentan-carbonsäure-(2) (Maltosaccharinsäure), ferner die n-Hexonsäuren wie d-Allonsäure, d-Altronsäure, d-Gluconsäure, d-Talonsäure, d- und l-Mannonsäure, d-Idonsäure, d- und d,l-Galactonsäure. Bevorzugt sind Gluconsäure und Milchsäure. Durch die Verwendung dieser Säuren wird die Dispergierwirkung bei äquivalenten Mengen der kationischen Gruppen überraschenderweise wesentlich erhöht.

Als Härtungsmittel eignen sich z.B. Cyclobutantetracarbonsäure, Cyclopentantetracarbonsäure, 1,2,3,4-Butantetracarbonsäure, Aconitsäure, Citronensäure oder Anhydride dieser Säuren, sofern diese existieren, bzw. saure Ester, die stets mindestens 3 freie COOH-Gruppen aufweisen, aus diesen Säuren und mehrwertigen Alkoholen mit 2 bis 12, vorzugsweise 2 bis 6 C-Atomen, wie Glycerin, Trimethyloläthan oder -propan, Alkandiolen und deren Oligomeren, die gegebenenfalls eine oder mehrere Ätherbrücken enthalten, wie Äthylenglykol, Propan- und Butandiole, Diäthylen- und Dipropylenglykol, Triäthylenglykol, Neopentylglykol oder dergleichen. Als solche Ester seien z.B. die aus 2 Mol Citronensäure und einem Mol Äthylenglykol genannt.

Es ist auch möglich, saure Ester mit 3 oder mehr COOH-Gruppen von Pyromellithsäure, Trimellithsäure, Phthalsäure, Endomethylentetra- oder -hexahydrophtalsäure, Maleinsäure, Fumarsäure bzw. deren Anhydriden, sofern diese existieren, mit mehrwertigen Alkoholen, z.B. den vorstehend genannten, als Polycarbonsäure-Härter zu verwenden, sofern diese sauren Ester eine ausreichende Wasserlöslichkeit bzw. Wasserverdünnbarkeit besitzen. Hierbei ist zu beachten, daß zweiwertige Carbonsäuren mit mindestens dreiwertigen Alkoholen bzw. zweiwertige Alkohole mit mindestens dreiwertigen Carbonsäuren umgesetzt werden, um eine ausreichende Anzahl von COOH-Gruppen im sauren Ester zu erhalten.

Die Addition des primären und/oder sekundären Amins an die Glycidylgruppen und die Quaternisierung des gebildeten Adduktes mit einer Monocarbonsäure wird vorzugsweise in Gegenwart von mindestens einem organischen Lösungsmittel mit einem Siedepunkt zwischen 40 und 170°C, bevorzugt einem Alkanol, z.B. den unten genannten bei Temperaturen vorgenommen, unter denen das Lösungsmittel mit den Epoxydgruppen nicht reagiert. Als Lösungsmittel kommen z.B. solche in Frage, die nach erfolgter Dispergierung durch Destillation unter vermindertem Druck wieder entfernt werden können. Erfolgt keine Entfernung des Lösungsmittels, kann dieses auch höhersiedend sein.

Als Lösungsmittel, in denen die festen Epoxydharze bei 50 bis 100°C in gelöster Form vor der Aminzugabe vorliegen sollen und die in der wäßrigen Dispersion enthalten sein können, eignen sich je nach dem Epoxydharztyp z.B. alle niedrig siedenden Alkohole, wie Methanol, Äthanol, die Propanole und Butanole, aromatische Kohlenwasserstoffe, wie Benzol, Toluol oder Xylol, ferner auch

die verschiedenen niedriger siedenden Ketone, z.B. Aceton, Methyläthylketon und Methylisobutylketon, gegebenenfalls im Gemisch mit den Alkanolen. Brauchbar sind auch Äther wie Tetrahydrofuran, Monoalkyläther des Äthylenglykols wie Methylglykol, Äthylglykol, Butylglykol, Hexylglykol oder die entsprechenden Diäther des Äthylenglykols, Ester wie Äthylacetat, n-Butylacetat und halogenierte Aromaten, z.B. Chlorbenzol. Bevorzugt werden Lösungsmittel mit einem Siedepunkt unter 145°C und ganz besonders Gemische aus Alkoholen, z.B. den oben genannten, und bis zu 90 % Aromaten, z.B. Toluol oder Xylol, eingesetzt.

Vor der Dispergierung der modifizierten Epoxydharze können auch nichtionische Emulgatoren zugesetzt werden, beispielsweise Acyl-, Alkyl-, Oleyl- und Alkylaryloxyäthylate, Polyoxyäthylen-sorbit -monoacylate, Copolymere aus Äthylenoxyd und Propylenoxyd mit einem Mindestgehalt von 10 % Äthylenoxyd, ferner das Alkindiol der Formel

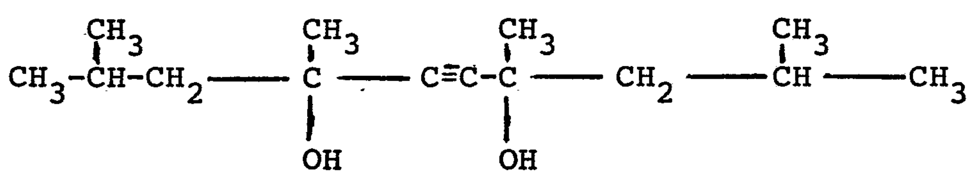

bzw. seine Oxäthylierungsprodukte, wobei bevorzugt die Emulgatoren mit einem HLB-Wert (= hydrophilic lipophilic balance) von über 10 eingesetzt werden, um eine genügende Wasserverdünnbarkeit zu gewährleisten.

Die Herstellung der erfindungsgemäßen Bindemittel aus wäßrigen Dispersionen fester Epoxydharze erfolgt zweckmäßig so, daß das in einem*Lösungsmittel bzw. Lösungsmittelgemisch vorliegende feste Epoxydharz unter inniger Vermischung, z.B. unter Rühren, bei 40 bis 100°C, vorzugsweise bei 60 bis 90°C innerhalb von 10 bis 180, vor-

*) organischen

zugsweise 15 bis 60 Min. mit dem primären bzw. sekundären Amin versetzt wird und nach Beendigung einer Kondensationszeit, die z.B. 10 bis 300, bevorzugt 60 bis 240 Min. beträgt, im gleichen Temperaturbereich mit der Monocarbonsäure versetzt wird, wobei das Äquivalentverhältnis der Monocarbonsäure : Amin = (0,5 bis 3) : 1, vorzugsweise (0,7 bis 1,4) : 1 sein soll. Der Zusatz der Monocarbonsäure erfolgt im allgemeinen innerhalb von 10 bis 80, vorzugsweise 40 bis 80 Min.

Anschließend wird der nichtionische Emulgator in einer Menge von im allgemeinen 0,1 bis 10 Gew.-%, bevorzugt 0,5 bis 5 Gew.-%, zugegeben, bezogen auf das eingesetzte feste Epoxydharz. Mit einer ausreichenden Menge deionisiertem Wasser, die im allgemeinen 50 bis 200, bevorzugt 80 bis 120 Gew.-% des eingesetzten festen Epoxydharzes entspricht, wird zweckmäßig bei 20 bis 80°C, vorzugsweise 30 bis 60°C, die wäßrige Dispersion hergestellt, aus der anschließend unter vermindertem Druck bei z.B. 15 bis 300 mm Hg und 20 bis 40°C das Lösungsmittel azeotrop entfernt werden kann. Man konzentriert dann z.B. bis zu einem Festkörperanteil von 50 bis 60 Gew.-% bzw. es wird nur soviel deionisiertes Wasser zugesetzt, daß der gewünschte Festkörperanteil erreicht wird.

Anschließend wird die wäßrige Epoxydharz-Dispersion mit z.B. 2 bis 20 Gew.-% des Härters, bezogen auf den Festanteil der wäßrigen Epoxydharz-Dispersion, versetzt und homogen vermischt.

Zusätzlich können zu diesem erfindungsgemäßen wärmehärtbaren Bindemittel geringe Mengen, z.B. bis zu 3 % des Festanteils, von Härtungsbeschleunigern wie Phosphorsäure und p-Toluolsulfonsäure bzw. deren Morpholinsalzen

und Verlaufmittel wie wasserverträgliche Siliconöle auf Basis eines Siloxan-Glykol-Copolymeren zugesetzt werden.

Die wärmehärtbaren Bindemittel aus wäßrigen Dispersionen und wasserlöslichen Härtungsmitteln werden bei Temperaturen von im allgemeinen 120 bis 350°C, bevorzugt 150 bis 220°C eingebrannt.

Die erfindungsgemäßen Bindemittel lassen sich vielseitig verwenden, insbesondere zur Herstellung von Lacken und Überzügen. Die gehärteten Produkte besitzen eine ausgezeichnete Wasser-, Säure- und Chemikalienbeständigkeit, guten Oberflächenglanz und sehr gute Elastizität. Aufgrund ihrer hohen Elastizität können die aus den Bindemitteln hergestellten, z. B. auf Metall aufgebrachten Filme ohne Beeinträchtigung mit der Unterlage, z. B. dem Metallblech, verformt werden. Sie zeigen vor allem eine günstige Tiefziehfähigkeit. Da die Produkte auch unter den Bedingungen, unter denen Lebensmittelkonserven sterilisiert werden, gut beständig sind (im folgenden als sterilisationsfest bezeichnet) und keine den Geschmack beeinträchtigenden Stoffe abgeben, eignen sie sich hervorragend als Lack für Lebensmittelverpackungen, vor allem für Konservendosen.

---

In den folgenden Beispielen sind % Gew.-%. Die Viskosität wurde jeweils bei 25 °C im Brookfield-Viskosimeter ermittelt.

<u>BEISPIELE</u>

<u>I) Herstellung der Dispersionen</u>

1) 364 g festes Epoxydharz auf Basis von Bisphenol A (Epoxyäquivalent 410) wurden geschmolzen und bei 105 °C in 180 g n-Butanol gelöst. Bei 80 °C wurden 21 g Diäthanolamin in 15 min zugesetzt (22,5 % der Glycidylgruppen wurden umgesetzt). Man ließ 1 Stunde bei 80 °C nachreagieren und versetzte dann bei 70 °C innerhalb 1 Stunde mit 99 g 50%iger Gluconsäure. Das Verhältnis Säure/Amin betrug 1,23; Teilchengröße 0,6 µm.

2) 364 g festes Epoxydharz auf Basis von Bisphenol A (Epoxydäquivalent 910) wurden geschmolzen und bei 125 °C in 45 g Toluol und 135 g n-Butanol gelöst. Bei 80 °C wurden 4 g Diäthanolamin in 15 min zugegeben (9,1 % der Glycidylgruppen wurden umgesetzt). Man ließ 1 Stunde bei 80 °C nachreagieren und versetzte dann bei 70 °C innerhalb 1 Stunde mit 11 g 50%iger Gluconsäure. Das Verhältnis Säure/Amin betrug 0,74; Teilchengröße 0,55 µm.

3) 364 g festes Epoxydharz auf Basis von Bisphenol A (Epoxydäquivalent 1865) wurden geschmolzen und bei 125 °C in 45 g Toluol und 135 g n-Butanol gelöst. Bei 80 °C wurden 4 g Diäthanolamin in 15 min zugegeben (18,7 % der Glycidylgruppen wurden umgesetzt). Man ließ 1 Stunde bei 80 °C nachreagieren und versetzte dann bei 70 °C innerhalb 1 Stunde mit 11 g 50%iger Gluconsäure. Das Verhältnis Säure/Amin betrug 0,74; Teilchengröße 0,5 µm.

Die Herstellung der wäßrigen Dispersionen aus diesen Vorstufen erfolgte in der Weise, daß 450 bis 1000 g deionisiertes Wasser bei 30 bis 80 °C, bevorzugt 40 bis 50 °C eingerührt wurde, bis eine Öl/Wasser-Emulsion entstanden war, aus der das Lösungsmittelgemisch unter vermindertem Druck bei etwa 40 °C azeotrop mit Wasser entfernt wurde. Die Dispersionen wurden bis zu einem Festkörperanteil von 55 bis 60 % konzentriert und anschließend durch ein 56 µm Sieb filtriert.

| | Beispiel 1 | Beispiel 2 | Beispiel 3 |
|---|---|---|---|
| Festkörpergehalt % | 56,4 | 63,3 | 61,7 |
| Viskosität mPas (25 °C) Spindel 3/30 U (Brookfield) | 5330 | 1160 | 1000 |
| pH | 4,1 | 3,7 | 3,7 |

4) 291 g des Epoxydharzes von Beispiel 3 wurden geschmolzen und bei 130 °C innerhalb 1 Stunde in 36 g Toluol und 108 g n-Butanol gelöst. Bei 80 °C wurden 9 g Diäthanolamin in 15 min zugegeben (57,5 % der Glycidylgruppen wurden umgesetzt). Man ließ 1 Stunde bei 80 °C nachreagieren. Dann wurden innerhalb 1 Stunde 7,2 g einer 99%igen Ameisensäure zugegeben. Das Verhältnis Säure/Amin betrug 1,8.

Das Reaktionsprodukt wurde auf 40 °C gekühlt und innerhalb 1 Stunde mit 500 g deionisertem Wasser versetzt. Anschließend wurde das Lösungsmittelgemisch unter vermindertem Druck bei 40 °C azeotrop mit Wasser destillativ entfernt. Die Dispersion wurde durch ein 56 µm Sieb filtriert. Festkörpergehalt 44,5 %, Viskosität 1700 mPa.s (Spindel 3/30 U), Teilchengröße 0,4 µm.

5) Beispiel 4 wurde wiederholt. Zur Herstellung der wässerigen Dispersion wurden jedoch nur 300 g deionisiertes Wasser eingesetzt. Eine Destillation erfolgte nicht. Festkörpergehalt 41 %, Viskosität 1900 mPa.s (Spindel 3/30 U), Teilchengröße 0,4 µm, Lösungsmittelgehalt etwa 19 %.

6) Es wurde entsprechend Beispiel 4 verfahren, jedoch wurden anstelle der Ameisensäure 23,9 g 90%ige Milchsäure eingesetzt. Das Verhältnis Säure/Amin betrug 2,79. Außerdem wurden 500 g deionisiertes Wasser eingesetzt. Festkörpergehalt 42,5 %, Viskosität 1800 mPa.s (Spindel 3/30 U), pH-Wert 3,25, Teilchengröße 0,5 µm.

7) 500 g festes Epoxydharz wie nach Beispiel 3 wurden geschmolzen und bei 130 °C in 62 g Toluol und 185 g n-Butanol gelöst. Bei 80 °C wurden in 15 min 6,4 g Diäthanolamin zugesetzt (22,9 % der vorhandenen Glycidylgruppen wurden umgesetzt). Man ließ noch 1 Stunde bei

80 °C nachkondensieren, setzte bei 70 °C 86 g deionisiertes Wasser und danach in 1 Stunde 21,7 g 50%ige Gluconsäure zu. Das Verhältnis Säure/Amin betrug 0,91.

Bei 40 °C wurden in ca. 1 Stunde 690 g deionisiertes Wasser zugesetzt. Nach Zugabe von 5 g 2,4,7,9-Tetramethyl-5-decyn-4,7-diol wurde unter vermindertem Druck bei 40 °C etwa 600 g Destillat entfernt. Nach Zugabe von 5,5 g eines Verlaufmittels, z. B. eines wasserverträglichen Siloxan-Glykol-Copolymeren wurde die Dispersion durch ein 56 µm Sieb filtriert. Festkörpergehalt 58 %, Viskosität 450 mPa.s (Spindel 2/12 U), pH-Wert 3,3 und Teilchengröße 0,3 bis 0,5 µm.

8) Beispiel 7 wurde wiederholt. Zur Herstellung der wässerigen Dispersion wurden jedoch nur 400 g deionisiertes Wasser eingesetzt. Eine Destillation erfolgte nicht. Festkörpergehalt 40 %, Viskosität 550 mPa.s (Spindel 2/12 U), pH-Wert 3,5 und Teilchengröße 0,3 bis 0,5 µm; Lösungsmittelgehalt etwa 16 %.

9) 500 g des Epoxydharzes aus Beispiel 3 wurden bei höchstens 80 °C am Rückfluß in einem Gemisch aus 187 g Butanon und 62 g n-Butanol gelöst. Bei 70 °C wurden in 20 min 5,8 g Diäthanolamin und anschließend 86 g deionisiertes Wasser zugegeben (20,7 % der vorhandenen Glycidylgruppen wurden umgesetzt). Man kondensierte 3 Stunden bei 70 °C und gab bei der gleichen Temperatur in 20 min 19,5 g 50%ige Gluconsäure zu. Das Verhältnis Säure/Amin betrug 0,9. Bei der gleichen Temperatur wurden 5 g eines nichtionischen Emulgators (Polyoxyäthylenglykolester einer ungesättigten $C_{18}$-Fettsäure, dessen Polyoxyäthylenrest 50 Äthylenoxydeinheiten enthält), gelöst in 10 g deionisiertem Wasser, zugesetzt.

Bei 40 °C wurde mit 540 g deionisiertem Wasser dispergiert. Unter vermindertem Druck wurde bei ca. 40 °C bis zu einem Festkörpergehalt von 57 bis 58 % konzentriert, wobei das Lösungsmittelgemisch azeotrop entfernt wurde. Beim Destillationsprozeß kann hier wie bei den anderen Beispielen ein geeignetes Antischaummittel zugesetzt werden. Nach Zugabe von 5,5 g eines Verlaufmittels wie im Beispiel 7 wurde die Dispersion durch ein 56 µm-Sieb filtriert. Viskosität bei 58 - % Festkörpergehalt 120 mPa.s (Spindel 2/12 U), Teilchengröße 0,32 µm.

10) Beispiel 9 wurde wiederholt. Zur Herstellung der wässerigen Dispersion wurden jedoch nur 340 g deionisiertes Wasser eingesetzt. Eine Destillation erfolgte nicht. Viskosität bei 43 % Festkörpergehalt 160 mPa.s (Spindel 2/12 U), Teilchengröße 0,35 µm, Lösungsmittelgehalt etwa 20 %.

<u>II) Herstellung der Bindemittel (Erfindung)</u>

Aus den wäßrigen Dispersionen der Beispiele 3 bis 6 wurden in folgender Weise die erfindungsgemäßen wärmehärtbaren Bindemittel hergestellt:

11) Die Dispersionen wurden mit 3,5 % 1,2,3,4-Butantetracarbonsäure (20%ig in deionisiertem Wasser gelöst) und 0,6 % Phosphorsäure (8,5%ig in deionisiertem Wasser gelöst), jeweils bezogen auf den Festkörper-Anteil der wäßrigen Epoxyd-Festharz-Dispersion, homogen vermischt.

Mit einem Aufziehdreieck wurden Filme von ca. 30 µm Dicke auf elektrolytisch verzinntes Stahlblech aufgezogen. Nach einer Ablüftdauer von 10 min wurden die Filme während 10 min bei 200 °C eingebrannt. Es wurden jeweils transparente, glänzende, elastische Filme von guter Sterilisationsfestigkeit und guter Beständigkeit gegen organische Säuren erhalten.

12) und 13) Anstelle der Butantetracarbonsäure wurden 7 bzw. 9 % Citronensäure (20%ig in deionisiertem Wasser gelöst) und 0,6 % Phosphorsäure (8,5%ig in deionisiertem Wasser gelöst), jeweils bezogen auf den Festkörperanteil der wäßrigen Epoxydfestharz-Dispersion, homogen vermischt.
Die in gleicher Weise hergestellten Filme ergaben die gleichen guten Eigenschaften.

14) Es wurde gemäß Beispiel 11 gearbeitet. Anstelle der Butantetracarbonsäure wurden 11,5 % eines sauren Teilesters aus 1 Mol Citronensäure und 0,55 Molen Neopentylglykol, in Gegenwart von 0,04 % Dibutylzinnoxyd bei 145 °C bis zur Säurezahl 465 verestert, eingesetzt. Die eingebrannten Filme ergaben die gleichen guten Eigenschaften.

Wenn anstelle der Dispersionen 3 bis 6 die Dispersionen 1,2,7 bis 10 zur Herstellung der Bindemittel verwendet und diese wie nach Beispielen 11 bis 14 weiterverarbeitet werden, so erhält man ebenfalls gehärtete Filme mit guten lacktechnischen Eigenschaften.

PATENTANSPRÜCHE:

1) Wärmehärtbare Bindemittel aus wäßrigen Dispersionen fester Epoxydharze der allgemeinen Struktur

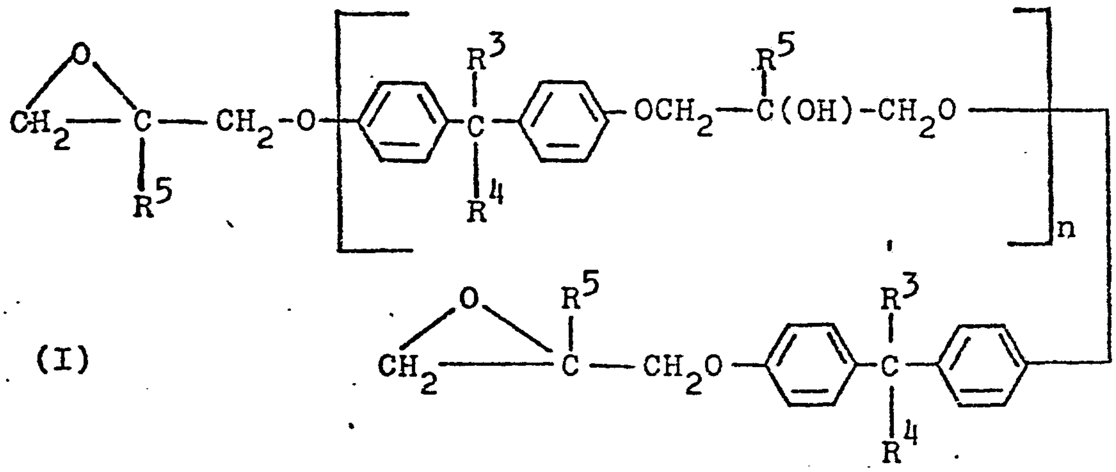

(I)

worin

$R^3$, $R^4$ und $R^5$ Methyl oder Wasserstoff und

n eine ganze Zahl von 2 bis 20

bedeuten und die Glycidylgruppen zum Teil durch primäre und/ oder sekundäre Amine und Quaternisierung in quartäre Ammoniumgruppen der Struktur

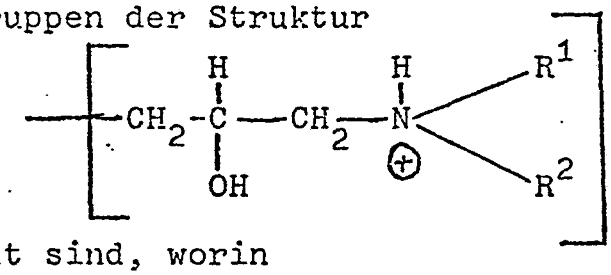

$A^{\ominus}$, (II)

umgewandelt sind, worin

$A^{\ominus}$ den anionischen Rest einer Monocarbonsäure mit 1 bis 6 C-Atomen,

$R^1$ und $R^2$ Hydroxyalkyl mit 1 bis 6, vorzugsweise 2 bis 4 C-Atomen bedeuten, jedoch einer der Reste auch Wasserstoff sein kann,

Härtungsmitteln und gegebenenfalls weiteren üblichen Zusatzstoffen, dadurch gekennzeichnet, daß sie als Härtungsmittel mehrbasische, wasserlösliche Polycarbonsäureeinheiten oder deren **Anhydride oder saure Ester, deren COOH-Funktionalität mindestens 3 ist, enthalten.**

2) Bindemittel nach Anspruch 1,dadurch gekennzeichnet, daß die Epoxydharze Epoxyäquivalente von 300 bis 3000, vorzugsweise von 1000 bis 2500, und Erweichungspunkte (nach Durrans) von 40 bis 145°C, vorzugsweise von 100 bis 130°C, besitzen.

3) Bindemittel nach Anspruch 1 oder 2, dadurch gekennzeichnet, daß 5 bis 90, vorzugsweise 40 bis 80 % der ursprünglich im Epoxydharz vorhandenen Glycidylgruppen durch Addition mit den Aminen umgesetzt sind.

4) Bindemittel nach einem oder mehreren der Ansprüche 1 bis 3, dadurch gekennzeichnet, daß der Härter in einer Menge von 2 bis 20 Gew.-%, bezogen auf den Festanteil der Epoxydharz-Dispersion, allein oder in Kombination mit einem Härtungsbeschleuniger und/oder Verlaufmittel zugegen ist.

5) Bindemittel nach einem oder mehreren der Ansprüche 1 bis 4, dadurch gekennzeichnet, daß die Dispersion einen nicht-ionischen Emulgator in einer Menge von 0,1 bis 10, vorzugsweise 0,5 bis 5 Gew.-% enthält, bezogen auf das eingesetzte feste Epoxydharz.

6) Bindemittel nach einem oder mehreren der Ansprüche 1 bis 5, dadurch gekennzeichnet, daß das Lösungsmittel aus der Dispersion entfernt ist.

7) Verfahren zur Herstellung von Bindemitteln nach einem oder mehreren der Ansprüche 1 bis 6, dadurch gekennzeichnet, daß das in einem Lösungsmittel - vorzugsweise in einem solchen mit einem Siedepunkt unter 145°C - vorliegende Epoxydharz der Struktur (I) bei 40 bis 100°C, vorzugsweise bei 60 bis 90°C mit einem primären und/oder sekundären Amin und dann im gleichen Temperaturbereich mit der Monocarbonsäure umgesetzt wird, wobei das Äquivalentverhältnis der Monocarbonsäure zu Amin (0,5 bis 3) : 1,

vorzugsweise (0,7 bis 1,4) : 1 beträgt, und daß dieses Reaktionsprodukt in Wasser dispergiert, Lösungsmittel entfernt und dann mit mehrbasischen, wasserlöslichen Polycarbonsäureeinheiten oder deren sauren Estern, deren COOH-Funktionalität mindestens 3 ist, als Härtungsmitteln sowie gegebenenfalls mit weiteren üblichen Zusatzstoffen versetzt wird.

8) Ausführungsform nach einem oder mehreren der Ansprüche 1 bis 7, dadurch gekennzeichnet, daß die Dispersion noch bis 30, vorzugsweise bis 20 Gew.-% organische Lösungsmittel enthält.

9) Ausführungsform nach einem oder mehreren der Ansprüche 1 bis 8, dadurch gekennzeichnet, daß einer der Reste $R^1$ und $R^2$ Alkyl mit 1 bis 6 C-Atomen ist.

10) Verwendung der Bindemittel nach einem oder mehreren der Ansprüche 1 bis 6 bzw. des nach dem Verfahren des Anspruchs 7 erhaltenen Bindemittels zur Herstellung gehärteter Produkte, insbesondere von Überzügen, durch Härtung bei Temperaturen von 120 bis 350°C, vorzugsweise 150 bis 220°C.

**Patentansprüche für Österreich:**

1) Verfahren zur Herstellung von Bindemitteln auf der Basis von wäßrigen Dispersionen fester Epoxydharze, dadurch gekennzeichnet, daß ein in einem Lösungsmittel - vorzugsweise in einem solchen mit einem Siedepunkt unter 145°C - vorliegendes festes Epoxydharz der allgemeinen Struktur

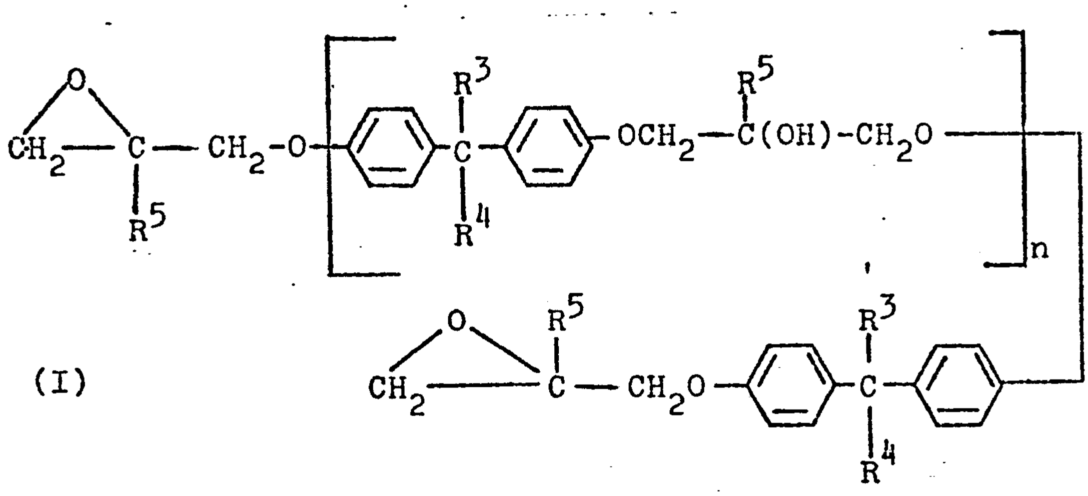

(I)

worin $R^3$, $R^4$ und $R^5$ Methyl oder Wasserstoff und n eine ganze Zahl von 2 bis 20 bedeuten, bei 40 bis 100°C, vorzugsweise bei 60 bis 90°C mit einem primären und/oder sekundären Amin der Formel

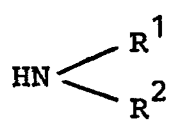

und dann im gleichen Temperaturbereich mit einer Monocarbonsäure $H^+$ $A^{(-)}$ umgesetzt wird, wobei $R^1$ und $R^2$ Hydroxyalkyl mit 1 bis 6, vorzugsweise 2 bis 4 C-Atomen bedeuten, jedoch einer der Reste auch Wasserstoff sein kann, und $A^{(-)}$ der anionische Rest einer Monocarbonsäure mit 1 bis 6 C-Atomen ist und das Äquivalentverhältnis der Monocarbonsäure zu Amin (0,5 bis 3) : 1, vorzugsweise (0,7 bis 1,4) : 1 beträgt, und daß dieses Reaktionsprodukt in Wasser dispergiert, Lösungsmittel entfernt und dann mit mehrbasischen, wasserlöslichen Polycarbonsäureeinheiten oder deren sauren Estern, deren COOH-Funktionalität mindestens 3 ist, als Härtungsmitteln sowie gegebenenfalls mit weiteren üblichen Zusatzstoffen versetzt wird.

2) Verfahren nach Anspruch 1, dadurch gekennzeichnet, daß das Epoxydharz (I) Epoxyäquivalente von 300 bis 3000, vorzugsweise von 1000 bis 2500, und Erweichungspunkte (nach Durrans) von 40 bis 145°C, vorzugsweise von 100 bis 130°C, besitzt.

3) Verfahren nach Anspruch 1 oder 2, dadurch gekennzeichnet, daß 5 bis 90, vorzugsweise 40 bis 80 % der ursprünglich im Epoxydharz vorhandenen Glycidylgruppen durch Addition mit den Aminen zu quartären Ammoniumgruppen der Struktur

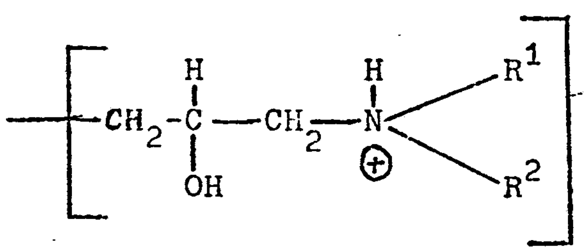

$A^{\ominus}$, (II)

umgewandelt werden.

4) Verfahren nach einem oder mehreren der Ansprüche 1 bis 3, dadurch gekennzeichnet, daß der Härter in einer Menge von 2 bis 20 Gew.-%, bezogen auf den Festanteil der Epoxydharz-Dispersion, allein oder in Kombination mit einem Härtungsbeschleuniger und/oder Verlaufmittel zugesetzt wird.

5) Verfahren nach einem oder mehreren der Ansprüche 1 bis 4, dadurch gekennzeichnet, daß der Dispersion ein nicht-ionischer Emulgator in einer Menge von 0,1 bis

10, vorzugsweise 0,5 bis 5 Gew.-%, bezogen auf das eingesetzte feste Epoxydharz, zugesetzt wird.

6) Verfahren nach einem oder mehreren der Ansprüche 1 bis 5, dadurch gekennzeichnet, daß das Lösungsmittel vollständig entfernt wird.

7) Verfahren nach einem oder mehreren der Ansprüche 1 bis 5, dadurch gekennzeichnet, daß die Dispersion noch bis 30, vorzugsweise bis 20 Gew.-% organische Lösungsmittel enthält.

8) Verfahren nach einem oder mehreren der Ansprüche 1 bis 7, dadurch gekennzeichnet, daß einer der Reste $R^1$ und $R^2$ Alkyl mit 1 bis 6 C-Atomen bedeutet.

9) Verwendung der nach dem Verfahren der Ansprüche 1 bis 8 erhaltenen Bindemittel zur Herstellung gehärteter Produkte, insbesondere von Überzügen.

10) Verwendung nach Anspruch 9, dadurch gekennzeichnet, daß die Härtung bei Temperaturen von 120 bis 350°C, vorzugsweise 150 bis 220°C erfolgt.

0058942

Nummer der Anmeldung

EP 82 10 1216

Europäisches Patentamt

# EUROPÄISCHER RECHERCHENBERICHT

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | CH - A - 466 580 (LACKWERKE WÜLFING)<br>* Patentanspruch; Spalte 2, Zeilen 10-35; Spalte 3, Zeilen 1-17 *<br>-- | 1-10 | C 08 G 59/58<br>C 08 G 59/64<br>C 09 D 3/58 |
| Y | US - A - 3 716 402 (CELANESE)<br>* Patentansprüche; Spalte 5, Zeilen 31-54 *<br>-- | 1-10 | RECHERCHIERTE SACHGEBIETE (Int. Cl.³) |
| Y | DE - A - 2 602 227 (HOECHST)<br>* Patentansprüche; Seite 6; 3. Absatz *<br>---------- | 1-10 | C 08 G |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| DEN HAAG | 7. Mai 1982 | DERAEDT |